# EUROPEAN PATENT APPLICATION

(11) **EP 3 985 937 A1**
(43) Date of publication of application: **20.04.2022**
(21) Application number: 20825833.5
(22) Date of filing: 12.06.2020
(51) Int. Cl.: H04L 29/08

(54) **METHOD, DEVICE, EQUIPMENT FOR DETERMINING EDGE APPLICATION, AND STORAGE MEDIUM**

(30) Priority: 17.06.2019 CN 201910522131
(71) Applicant: China Mobile Communication Co., Ltd Research Institute, Beijing 100053 (CN); China Mobile Communications Group Co., Ltd, Beijing 100032 (CN)
(72) Inventor: CAI, Hui, Beijing 100032 (CN); GENG, Liang, Beijing 100032 (CN); LU, Lu, Beijing 100032 (CN)
(74) Representative: Hertin und Partner Rechts- und Patentanwälte PartG mbB
(86) International application number: PCT/CN2020/095800
(87) International publication number: WO 2020/253626

(57) **Abstract**

The present disclosure provides a method and a device for determining an edge application, an apparatus and a storage medium. The method includes: receiving a DNS addressing request from a UE, the DNS addressing request including indication information for addressing the edge application; obtaining information of a target edge application in accordance with the indication information for addressing the edge application; and transmitting the information of the target edge application to the UE.

## Description

### CROSS-REFERENCE TO RELATED APPLICATION

This application claims a priority of the Chinese patent application No.201910522131.9 filed on June 17, 2019, which is incorporated herein by reference in its entirety.

### TECHNICAL FIELD

The present disclosure relates to the field of communications technology, in particular to a method and a device for determining an edge application, an apparatus, and a storage medium.

### BACKGROUND

In a 4^{th}-Generation (4G) network, a Domain Name System (DNS) address may be statically configured on a User Equipment (UE), or fed by a network side back to the UE during the attachment of the UE to the 4G network.

Edge computing nodes are distributed in a scattering manner, and there is a core issue about how to obtain, by a computing service requester, an optimal peripheral service node at a network level for the edge computing. Hence, in a DNS network, there is an urgent need to provide a scheme for addressing an edge node in an edge computing scenario.

### SUMMARY

An object of the present disclosure is to provide a method and a device for determining an edge application, an apparatus, and a storage medium, so as to solve the problem in the related art where it is impossible to determine a nearest edge application for a UE in the DNS.

In a first aspect, the present disclosure provides in some embodiments a method for determining an edge application, applied for a first DNS, including: receiving a DNS addressing request from a UE, the DNS addressing request including indication information for addressing the edge application; obtaining information of a target edge application in accordance with the indication information for addressing the edge application; and transmitting the information of the target edge application to the UE.

In a possible embodiment of the present disclosure, the indication information for addressing the edge application includes at least one of a Tracking Area (TA) where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the obtaining the information of the target edge application in accordance with the indication information for addressing the edge application includes: transmitting a query request to an edge DNS in accordance with the indication information for addressing the edge application; and receiving a response message from the edge DNS, the response message including the information of the target edge application.

In a possible embodiment of the present disclosure, the information of the target edge application includes at least one of an Internet Protocol (IP) address of the target edge application, and a Fully Qualified Domain Name (FQDN) of the target edge application.

In a possible embodiment of the present disclosure, the indication information for addressing the edge application includes an indication indicating that the UE needs to use an edge service. The obtaining the information of the target edge application in accordance with the indication information for addressing the edge application includes: transmitting a first query request to a scheduling center of an edge computing node; receiving a first response message from the scheduling center of the edge computing node, the first response message including information of an edge DNS; transmitting a second query request to the edge DNS in accordance with the information of the edge DNS; and receiving a second response message from the edge DNS, the second response message including the information of the target edge application.

In a second aspect, the present disclosure provides in some embodiments a method for determining an edge application, applied for a UE, including: transmitting a DNS addressing request to a first DNS, the DNS addressing request including indication information for addressing the edge application; and receiving information of a target edge application from the first DNS.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier.

In a possible embodiment of the present disclosure, the indication information for addressing the edge application includes an indication indicating that the UE needs to use an edge service.

In a third aspect, the present disclosure provides in some embodiments a method for determining an edge application, applied for an edge DNS, including: receiving a query request from a first DNS; and transmitting information of a target edge application to the first DNS in accordance with the query request. The query request is transmitted by the first DNS in accordance with a DNS addressing request from a UE, and the DNS addressing request includes indication information for addressing the edge application.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

In a fourth aspect, the present disclosure provides in some embodiments a method for determining an edge application, applied for a scheduling center of an edge computing node, including: receiving a query request from a first DNS; and transmitting information of an edge DNS to the first DNS in accordance with the query request, so that the first DNS obtains information of a target edge application from the edge DNS in accordance with the information of the edge DNS. The query request is transmitted by the first DNS in accordance with a DNS addressing request from a UE, and the DNS addressing request includes indication information for addressing the edge application.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

In a fifth aspect, the present disclosure provides in some embodiments a device for determining an edge application, applied for a first DNS, including a processor and a transceiver. The transceiver is configured to receive a DNS addressing request from a UE, the DNS addressing request includes indication information for addressing the edge application, the processor is configured to obtain information of a target edge application in accordance with the indication information for addressing the edge application, and the transceiver is further configured to transmit the information of the target edge application to the UE.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the processor is further configured to: transmit a query request to an edge DNS in accordance with the indication information for addressing the edge application; and receive a response message from the edge DNS, the response message including the information of the target edge application.

In a possible embodiment of the present disclosure, the indication information for addressing the edge application includes an indication indicating that the UE needs to use an edge service. The processor is further configured to: transmit a first query request to a scheduling center of an edge computing node; receive a first response message from the scheduling center of the edge computing node, the first response message including information of an edge DNS; transmit a second query request to the edge DNS in accordance with the information of the edge DNS; and receive a second response message from the edge DNS, the second response message including the information of the target edge application.

In a sixth aspect, the present disclosure provides in some embodiments a device for determining an edge application, applied for a UE, including a processor and a transceiver. The transceiver is configured to: transmit a DNS addressing request to a first DNS, the DNS addressing request including indication information for addressing the edge application; and receive information of a target edge application from the first DNS.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

In a seventh aspect, the present disclosure provides in some embodiments a device for determining an edge application, applied for an edge DNS, including a processor and a transceiver. The transceiver is configured to: receive a query request from a first DNS; and transmit information of a target edge application to the first DNS in accordance with the query request. The query request is transmitted by the first DNS in accordance with a DNS addressing request from a UE, and the DNS addressing request includes indication information for addressing the edge application.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

In an eighth aspect, the present disclosure provides a device for determining an edge application, applied for a scheduling center of an edge computing node, including a processor and a transceiver. The transceiver is configured to: receive a query request from a first DNS; and transmit information of an edge DNS to the first DNS in accordance with the query request, so that the first DNS obtains information of a target edge application from the edge DNS in accordance with the information of the edge DNS. The query request is transmitted by the first DNS in accordance with a DNS addressing request from a UE, and the DNS addressing request includes indication information for addressing the edge application.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

In a ninth aspect, the present disclosure provides in some embodiments a communication apparatus, including a memory, a processor, and a computer program stored in the memory and executed by the processor. The processor is configured to execute the computer program so as to implement the steps of the method in the first aspect, or implement the steps of the method in the second aspect, or implement the steps of the method in the third aspect, or implement the steps of the method in the fourth aspect.

In a tenth aspect, the present disclosure provides in some embodiments a computer-readable storage medium storing therein a computer program. The computer program is executed by a processor so as to implement the steps of the method in the first aspect, or implement the steps of the method in the second aspect, or implement the steps of the method in the third aspect, or implement the steps of the method in the fourth aspect.

According to the embodiments of the present disclosure, the information of the target edge application is obtained by the first DNS in accordance with the indication information for addressing the edge application from the UE. As a result, it is able to obtain a nearest edge application for providing a service for the UE in an edge computing scenario in a DNS.

### BRIEF DESCRIPTION OF THE DRAWINGS

In order to illustrate the technical solutions of the present disclosure in a clearer manner, the drawings desired for the present disclosure will be described hereinafter briefly. Obviously, the following drawings merely relate to some embodiments of the present disclosure, and based on these drawings, a person skilled in the art may obtain the other drawings without any creative effort.
Fig.1 is a flow chart of a method for determining an edge application according to one embodiment of the present disclosure;
Fig.2 is another flow chart of the method for determining the edge application according to one embodiment of the present disclosure;
Fig.3 is yet another flow chart of the method for determining the edge application according to one embodiment of the present disclosure;
Fig.4 is still yet another flow chart of the method for determining the edge application according to one embodiment of the present disclosure;
Fig.5 is a schematic view showing a network architecture according to one embodiment of the present disclosure;
Fig.6 is another schematic view showing the network architecture according to one embodiment of the present disclosure;
Fig.7 is a schematic view showing a device for determining an edge application according to one embodiment of the present disclosure;
Fig.8 is another schematic view showing the device for determining the edge application according to one embodiment of the present disclosure;
Fig.9 is yet another schematic view showing the device for determining the edge application according to one embodiment of the present disclosure;
Fig.10 is still yet another schematic view showing the device for determining the edge application according to one embodiment of the present disclosure;
Fig.11 is a schematic view showing a communication apparatus according to one embodiment of the present disclosure;
Fig. 12 is another schematic view showing the communication apparatus according to one embodiment of the present disclosure;
Fig. 13 is yet another schematic view showing the communication apparatus according to one embodiment of the present disclosure; and
Fig. 14 is still yet another schematic view showing the communication apparatus according to one embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

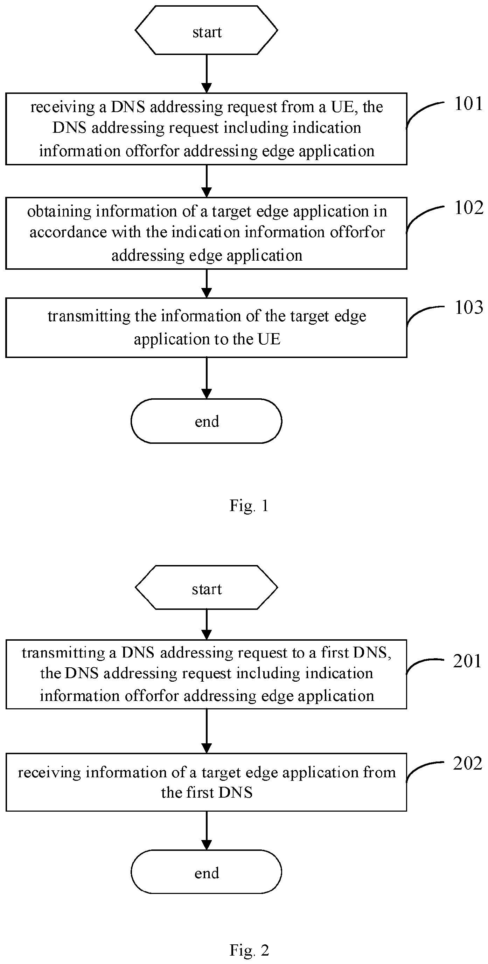

The present disclosure provides in some embodiments a method for determining an edge application, applied for a first DNS, which, as shown in Fig.1, includes the following steps.

Step 101: receiving a DNS addressing request from a UE, the DNS addressing request including indication information for addressing the edge application.

In the embodiments of the present disclosure, the indication information for addressing the edge application is provided in the following modes.

First mode: the indication information for addressing the edge application includes geographical position information of the UE and/or information of a network to which the UE logically belongs. For example, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network (e.g., a type of the private network) or an identifier of the private network, information of a slice (e.g., a type of the slice) or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The identifier of the forwarding plane to which the UE is connected and the identifier of the network to which the UE belongs are the information of the network to which the UE logically belongs. The information of the slice includes at least one of a business type of the slice and a tenant identifier of the slice.

The DNS addressing request may include the above information through an extended DNS request protocol.

Second mode: the indication information for addressing the edge application includes an indication indicating that the UE needs to use an edge service. For example, this indication is implemented through setting an identifier.

Step 102: obtaining information of a target edge application in accordance with the indication information for addressing the edge application.

In the first mode of Step 101, the first DNS transmits a query request to an edge DNS in accordance with the indication information for addressing the edge application and then receives a response message from the edge DNS, and the response message includes the information of the target edge application. The information of the target edge application includes at least one of an IP address and an FQDN of the target edge application.

In the second mode of Step 101, the first DNS transmits a first query request to a scheduling center of an edge computing node and receives a first response message from the scheduling center, and the first response message includes information of an edge DNS. Next, the first DNS transmits a second query request to the edge DNS in accordance with the information of the edge DNS and receives a second response message from the edge DNS, and the second response message includes the information of the target edge application. In this way, it is able to further reduce the influence on related functions of the first DNS.

Step 103: transmitting the information of the target edge application to the UE.

The information of the target edge application includes at least one of the IP and the FQDN of the target edge application.

According to the embodiments of the present disclosure, the information of the target edge application is obtained by the first DNS in accordance with the indication information for addressing the edge application from the UE. As a result, it is able to obtain a nearest edge application for providing a service for the UE in an edge computing scenario in a DNS.

The present disclosure further provides in some embodiments a method for determining an edge application for a UE which, as shown in Fig.2, includes the following steps.

Step 201: transmitting a DNS addressing request to a first DNS, the DNS addressing request including indication information for addressing the edge application.

In the embodiments of the present disclosure, the indication information for addressing the edge application is provided in the following modes.

First mode: the indication information for addressing the edge application includes geographical position information of the UE and/or information of a network to which the UE logically belongs. For example, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network (e.g., a type of the private network) or an identifier of the private network, information of a slice (e.g., a type of the slice) or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The identifier of the forwarding plane to which the UE is connected and the identifier of the network to which the UE belongs are the information of the network to which the UE logically belongs. The information of the slice includes at least one of a business type of the slice and a tenant identifier of the slice.

The DNS addressing request may include the above information through an extended DNS request protocol.

Second mode: the indication information for addressing the edge application includes an indication indicating that the UE needs to use an edge service. For example, this indication is implemented through setting an identifier.

Step 202: receiving information of a target edge application from the first DNS.

The mode of obtaining the information of the target edge application by the first DNS may refer to that mentioned in the embodiments as shown in Fig.1.

According to the embodiments of the present disclosure, the information of the target edge application is obtained by the first DNS in accordance with the indication information for addressing the edge application from the UE. As a result, it is able to obtain a nearest edge application for providing a service for the UE in an edge computing scenario in a DNS.

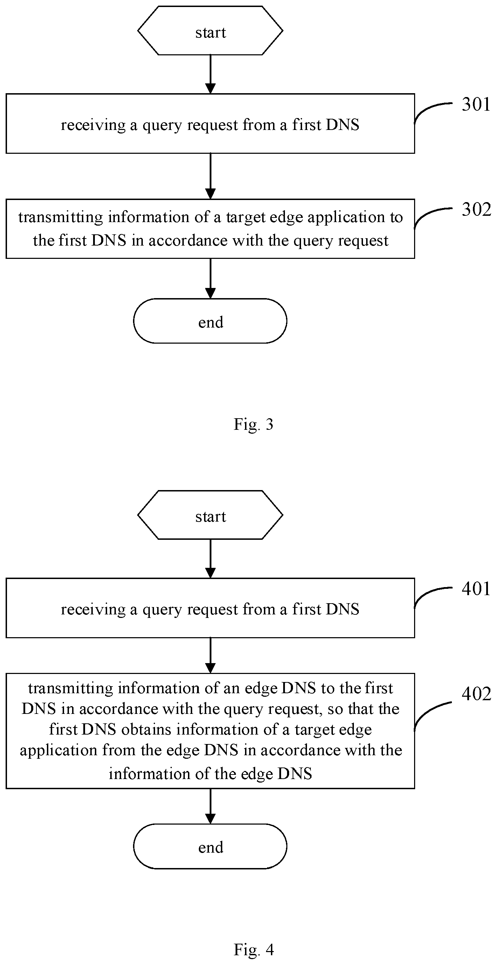

The present disclosure further provides in some embodiments a method for determining an edge application for an edge DNS which, as shown in Fig.3, includes: Step 301 of receiving a query request from a first DNS; and Step 302 of transmitting information of a target edge application to the first DNS in accordance with the query request.

The information of the target edge application includes at least one of an IP address and an FQDN of the target edge application. The query request is transmitted by the first DNS in accordance with a DNS addressing request from a UE, and the DNS addressing request includes indication information for addressing the edge application.

The implementation modes of the indication information for addressing the edge application may refer to those mentioned hereinabove.

According to the embodiments of the present disclosure, the information of the target edge application is obtained by the first DNS in accordance with the indication information for addressing the edge application from the UE. As a result, it is able to obtain a nearest edge application for providing a service for the UE in an edge computing scenario in a DNS.

The present disclosure further provides in some embodiments a method for determining an edge application, applied for a scheduling center of an edge computing node which, as shown in Fig.4, includes: Step 401 of receiving a query request from a first DNS; and Step 402 of transmitting information of an edge DNS to the first DNS in accordance with the query request, so that the first DNS obtains information of a target edge application from the edge DNS in accordance with the information of the edge DNS. The information of the target edge application includes at least one of an IP address and an FQDN of the target edge application.

The query request is transmitted by the first DNS in accordance with a DNS addressing request from a UE, and the DNS addressing request includes indication information for addressing the edge application.

The implementation modes of the indication information for addressing the edge application may refer to those mentioned hereinabove.

According to the embodiments of the present disclosure, the information of the target edge application is obtained by the first DNS in accordance with the indication information for addressing the edge application from the UE. As a result, it is able to obtain a nearest edge application for providing a service for the UE in an edge computing scenario in a DNS.

In the related art, there is no position-based addressing scheme in a mobile network for a DNS for the following reasons. 1) The DNS is a passive, stateless IP network system, so it does not have a capability of collecting position information on its own initiative. 2) The DNS has a high network position and an amount of data to be parsed is large, so the DNS at a network output shall reduce the amount of data to be parsed as possible. However, due to so many edge points, a huge number of application instance addresses are managed by the DNS, which brings a heavy burden to the DNS.

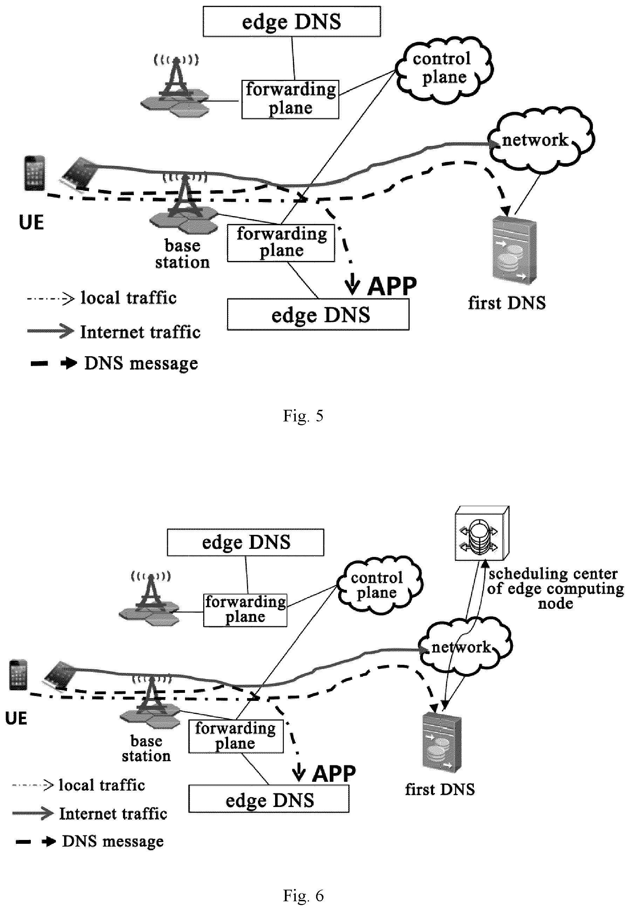

Based on the above, the present disclosure provides in some embodiments a method for determining an edge application. Fig.5 shows available network architecture according to one embodiment of the present disclosure. As shown in Fig.5, the method includes the following steps.

Step 501: obtaining, by a UE, indication information for addressing the edge application in a network access process.

Step 502: carrying, by the UE, the indication information for addressing the edge application in a DNS request data packet through a forwarding plane.

The indication information for addressing the edge application includes geographical position information of the UE and/or information of a network to which the UE logically belongs, e.g., a TA where the UE is located, a cell where the UE is located, an identifier of a base station to which the UE is connected, an identifier of the forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

Step 503: parsing, by a first DNS, the data packet from the UE to obtain a position of the UE, and transmitting a query request to an edge DNS.

Step 504: returning, by the edge DNS, an address of a target edge application to the first DNS.

Step 505: returning, by the first DNS, the address of the target edge application to the UE.

Fig.6 shows available network architecture according to one embodiment of the present disclosure. As shown in Fig.6, a method for determining an edge application includes the following steps.

Step 601: notifying, by a network, a UE to use an edge service in a network access process of the UE.

Step 602: carrying, by the UE, an indication indicating that the UE needs to use the edge service in a DNS request data packet through a forwarding plane.

Step 603: parsing, by a first DNS, the data packet from the UE to determine that the UE needs to use the edge service, and transmitting a query request to a scheduling center of an edge computing node.

Step 604: querying, by the scheduling center of the edge computing node, a position of the UE at a network side, and notifying an address of an edge DSN to the first DNS.

Step 605: transmitting, by the first DNS, a query request to the edge DNS.

Step 606: returning, by the edge DNS, an address of a target edge application to the first DNS.

Step 607: returning, by the first DNS, the address of the target edge application to the UE.

Based on the above, in the embodiments of the present disclosure, it is able for the UE to access a nearest service APP through arranging the edge nodes at different network positions and at different domains of a network, thereby to provide an optimal data flow path under an edge computing principle.

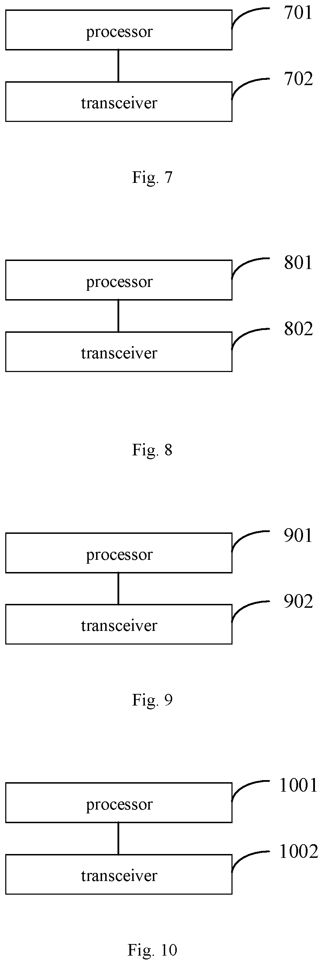

The present disclosure further provides a device for determining an edge application, applied for a first DNS which, as shown in Fig.7, includes a processor 701 and a transceiver 702. The transceiver 702 is configured to receive a DNS addressing request from a UE, the DNS addressing request includes indication information for addressing the edge application, the processor 701 is configured to obtain information of a target edge application in accordance with the indication information for addressing the edge application, and the transceiver 702 is further configured to transmit the information of the target edge application to the UE.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the processor 701 is further configured to: transmit a query request to an edge DNS in accordance with the indication information for addressing the edge application; and receive a response message from the edge DNS, the response message including the information of the target edge application. The information of the target edge application includes at least one of an IP address and an FQDN of the target edge application.

In a possible embodiment of the present disclosure, the indication information for addressing the edge application includes an indication indicating that the UE needs to use an edge service. The processor 701 is further configured to: transmit a first query request to a scheduling center of an edge computing node; receive a first response message from the scheduling center of the edge computing node, the first response message including information of an edge DNS; transmit a second query request to the edge DNS in accordance with the information of the edge DNS; and receive a second response message from the edge DNS, the second response message including the information of the target edge application.

An operating principle of the device in the embodiments of the present disclosure may refer to the above description about the method embodiment.

According to the embodiments of the present disclosure, the information of the target edge application is obtained by the first DNS in accordance with the indication information for addressing the edge application from the UE. As a result, it is able to obtain a nearest edge application for providing a service for the UE in an edge computing scenario in a DNS.

The present disclosure further provides in some embodiments a device for determining an edge application for a UE which, as shown in Fig.8, includes a processor 801 and a transceiver 802. The transceiver 802 is configured to: transmit a DNS addressing request to a first DNS, the DNS addressing request including indication information for addressing the edge application; and receive information of a target edge application from the first DNS.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

An operating principle of the device in the embodiments of the present disclosure may refer to the above description about the method embodiment.

According to the embodiments of the present disclosure, the information of the target edge application is obtained by the first DNS in accordance with the indication information for addressing the edge application from the UE. As a result, it is able to obtain a nearest edge application for providing a service for the UE in an edge computing scenario in a DNS.

The present disclosure further provides in some embodiments a device for determining an edge application, applied for an edge DNS which, as shown in Fig.9, includes a processor 901 and a transceiver 902. The transceiver 902 is configured to: receive a query request from a first DNS; and transmit information of a target edge application to the first DNS in accordance with the query request. The query request is transmitted by the first DNS in accordance with a DNS addressing request from a UE, and the DNS addressing request includes indication information for addressing the edge application.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

An operating principle of the device in the embodiments of the present disclosure may refer to the above description about the method embodiment.

According to the embodiments of the present disclosure, the information of the target edge application is obtained by the first DNS in accordance with the indication information for addressing the edge application from the UE. As a result, it is able to obtain a nearest edge application for providing a service for the UE in an edge computing scenario in a DNS.

The present disclosure further provides in some embodiments a device for determining an edge application, applied for a scheduling center of an edge computing node which, as shown in Fig.10, includes a processor 1001 and a transceiver 1002. The transceiver 1002 is configured to: receive a query request from a first DNS; and transmit information of an edge DNS to the first DNS in accordance with the query request, so that the first DNS obtains information of a target edge application from the edge DNS in accordance with the information of the edge DNS. The query request is transmitted by the first DNS in accordance with a DNS addressing request from a UE, and the DNS addressing request includes indication information for addressing the edge application.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

An operating principle of the device in the embodiments of the present disclosure may refer to the above description about the method embodiment.

According to the embodiments of the present disclosure, the information of the target edge application is obtained by the first DNS in accordance with the indication information for addressing the edge application from the UE. As a result, it is able to obtain a nearest edge application for providing a service for the UE in an edge computing scenario in a DNS.

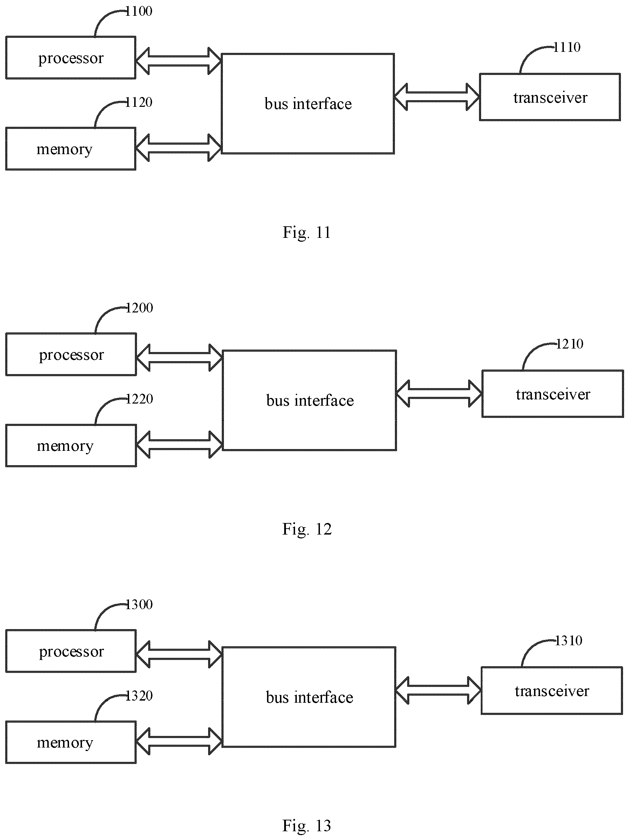

The present disclosure further provides in some embodiments a communication apparatus applied for a first DNS which, as shown in Fig.11, includes a processor 1100 configured to read a program in a memory 1120 so as to receive, through a transceiver 1100, a DNS addressing request from a UE, the DNS addressing request including indication information for addressing the edge application, obtain information of a target edge application in accordance with the indication information for addressing the edge application, and transmit, through the transceiver 1110, the information of the target edge application to the UE. The transceiver 1110 is configured to receive and transmit data under the control of the processor 1100.

In Fig. 11, bus architecture may include a number of buses and bridges connected to each other, so as to connect various circuits for one or more processors 1100 and one or more memories 1120. In addition, as is known in the art, the bus architecture may be used to connect any other circuits, such as a circuit for a peripheral device, a circuit for a voltage stabilizer and a power management circuit. A bus interface may be provided, and the transceiver 1110 may consist of a plurality of elements, i.e., a transmitter and a receiver for communication with any other devices over a transmission medium. The processor 1100 may take charge of managing the bus architecture as well as general processings. The memory 1120 may store therein data for the operation of the processor 1100.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

The processor 1100 is further configured to read the computer program, so as to: transmit a query request to an edge DNS in accordance with the indication information for addressing the edge application; and receive a response message from the edge DNS, the response message including the information of the target edge application.

The indication information for addressing the edge application includes an indication indicating that the UE needs to use an edge service. The processor 1100 is further configured to read the computer program, so as to: transmit a first query request to a scheduling center of an edge computing node; receive a first response message from the scheduling center of the edge computing node, the first response message including information of an edge DNS; transmit a second query request to the edge DNS in accordance with the information of the edge DNS; and receive a second response message from the edge DNS, the second response message including the information of the target edge application.

The present disclosure further provides in some embodiments a communication apparatus applied for a scheduling center of an edge computing node which, as shown in Fig. 12, includes a processor 1200 configured to read a program in a memory 1220, so as to: receive, through a transceiver 1210, a query request from a first DNS; and transmit information of an edge DNS to the first DNS in accordance with the query request, so that the first DNS obtains information of a target edge application from the edge DNS in accordance with the information of the edge DNS. The query request is transmitted by the first DNS in accordance with a DNS addressing request from a UE, and the DNS addressing request includes indication information for addressing the edge application. The transceiver 1210 is configured to receive and transmit data under the control of the processor 1200.

In Fig. 12, bus architecture may include a number of buses and bridges connected to each other, so as to connect various circuits for one or more processors 1200 and one or more memories 1220. In addition, as is known in the art, the bus architecture may be used to connect any other circuits, such as a circuit for a peripheral device, a circuit for a voltage stabilizer and a power management circuit. A bus interface may be provided, and the transceiver 1210 may consist of a plurality of elements, i.e., a transmitter and a receiver for communication with any other devices over a transmission medium. The processor 1200 may take charge of managing the bus architecture as well as general processings. The memory 1220 may store therein data for the operation of the processor 1200.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

The present disclosure further provides in some embodiments a communication device applied for an edge DNS which, as shown in Fig.13, includes a processor 1300 configured to read a program in a memory 1320, so as to: receive, through a transceiver 1310, a query request from a first DNS; and transmit information of a target edge application to the first DNS in accordance with the query request. The query request is transmitted by the first DNS in accordance with a DNS addressing request from a UE, and the DNS addressing request includes indication information for addressing the edge application. The transceiver 1310 is configured to receive and transmit data under the control of the processor 1300.

In Fig. 13, bus architecture may include a number of buses and bridges connected to each other, so as to connect various circuits for one or more processors 1300 and one or more memories 1320. In addition, as is known in the art, the bus architecture may be used to connect any other circuits, such as a circuit for a peripheral device, a circuit for a voltage stabilizer and a power management circuit. A bus interface may be provided, and the transceiver 1310 may consist of a plurality of elements, i.e., a transmitter and a receiver for communication with any other devices over a transmission medium. The processor 1300 may take charge of managing the bus architecture as well as general processings. The memory 1320 may store therein data for the operation of the processor 1300.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

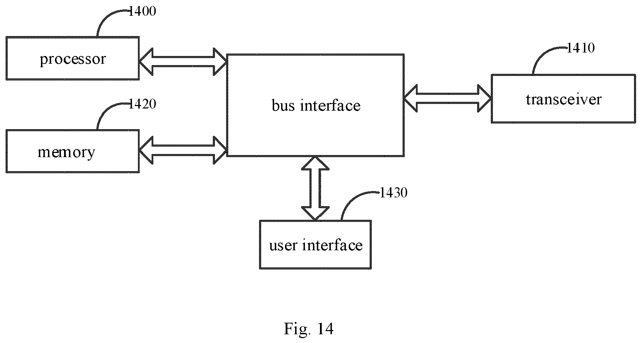

The present disclosure further provides in some embodiments a UE which, as shown in Fig. 14, includes a processor 1400 configured to read a program in a memory 420, so as to: transmit, through a transceiver 1410, a DNS addressing request to a first DNS, the DNS addressing request including indication information for addressing the edge application; and receive information of a target edge application from the first DNS. The transceiver 1410 is configured to receive and transmit data under the control of the processor 1400.

In Fig. 14, bus architecture may include a number of buses and bridges connected to each other, so as to connect various circuits for one or more processors 1400 and one or more memories 1420. In addition, as is known in the art, the bus architecture may be used to connect any other circuits, such as a circuit for a peripheral device, a circuit for a voltage stabilizer and a power management circuit. A bus interface may be provided, and the transceiver 1410 may consist of a plurality of elements, i.e., a transmitter and a receiver for communication with any other devices over a transmission medium. With respect to different UEs, a user interface 1430 may also be provided for devices which are to be arranged inside or outside the UE, and these devices may include but not limited to a keypad, a display, a speaker, a microphone and a joystick. The processor 1400 may take charge of managing the bus architecture as well as general processings. The memory 1420 may store therein data for the operation of the processor 1400.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

The present disclosure further provides in some embodiments a computer-readable storage medium storing therein a computer program. The computer program is executed by a processor, so as to: receive a DNS addressing request from a UE, the DNS addressing request including indication information for addressing the edge application; obtain information of a target edge application in accordance with the indication information for addressing the edge application; and transmit the information of the target edge application to the UE.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, when obtaining the information of the target edge application in accordance with the indication information for addressing the edge application, the computer program is further executed by the processor so as to: transmit a query request to an edge DNS in accordance with the indication information for addressing the edge application; and receive a response message from the edge DNS, the response message including the information of the target edge application.

In a possible embodiment of the present disclosure, the information of the target edge application includes at least one of an IP address and an FQDN of the target edge application.

In a possible embodiment of the present disclosure, the indication information for addressing the edge application includes an indication indicating that the UE needs to use an edge service. When obtaining the information of the target edge application in accordance with the indication information for addressing the edge application, the computer program is further executed by the processor so as to: transmit a first query request to a scheduling center of an edge computing node; receive a first response message from the scheduling center of the edge computing node, the first response message including information of an edge DNS; transmit a second query request to the edge DNS in accordance with the information of the edge DNS; and receive a second response message from the edge DNS, the second response message including the information of the target edge application.

The present disclosure further provides in some embodiments a computer-readable storage medium storing therein a computer program. The computer program is executed by a processor, so as to: transmit a DNS addressing request to a first DNS, the DNS addressing request including indication information for addressing the edge application; and receive information of a target edge application from the first DNS.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

The present disclosure further provides in some embodiments a computer-readable storage medium storing therein a computer program. The computer program is executed by a processor, so as to: receive a query request from a first DNS; and transmit information of a target edge application to the first DNS in accordance with the query request. The query request is transmitted by the first DNS in accordance with a DNS addressing request from a UE, and the DNS addressing request includes indication information for addressing the edge application.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

The present disclosure further provides in some embodiments a computer-readable storage medium storing therein a computer program. The computer program is executed by a processor, so as to: receive a query request from a first DNS; and transmit information of an edge DNS to the first DNS in accordance with the query request, so that the first DNS obtains information of a target edge application from the edge DNS in accordance with the information of the edge DNS. The query request is transmitted by the first DNS in accordance with a DNS addressing request from a UE, and the DNS addressing request includes indication information for addressing the edge application.

In a possible embodiment of the present disclosure, the indication information for addressing the edge application includes at least one of a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier. The information of the slice includes at least one of a business type of the slice and a tenant identifier of the slice.

In a possible embodiment of the present disclosure, the indication information for addressing the edge application includes an indication indicating that the UE needs to use an edge service.

It should be further appreciated that, the device and method may be implemented in any other ways. For example, the embodiments for the apparatus is merely for illustrative purposes, and the modules or units are provided merely on the basis of their logic functions. During the actual application, some modules or units may be combined together or integrated into another system. Alternatively, some functions of the module or units may be omitted or not executed. In addition, the coupling connection, direct coupling connection or communication connection between the modules or units may be implemented via interfaces, and the indirect coupling connection or communication connection between the modules or units may be implemented in an electrical or mechanical form or in any other form.

In addition, the functional units in the embodiments of the present disclosure may be integrated into a processing unit, or the functional units may exist independently, or two or more functional units may be combined together. These units may be implemented in the form of hardware, or hardware plus software.

The functional units implemented in a software form may be stored in a computer-readable medium. These software functional units may be stored in a storage medium and include several instructions so as to enable a computer device (a personal computer, a server or network device) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be appreciated that, the embodiments of the present disclosure may be implemented by hardware, software, firmware, middleware, microcode or a combination thereof. For the hardware implementation, the processor may include one or more of an Application Specific Integrated Circuit (ASIC), a digital signal processor (Digital Signal Processor, DSP), a DSP device (DSPD), a programmable logic device (Programmable Logic Device, PLD), a Field-Programmable Gate Array (FPGA), a general-purpose processor, a controller, a microcontroller, a microprocessor, any other electronic unit capable of achieving the functions in the present disclosure, or a combination thereof.

For the software implementation, the scheme in the embodiments of the present disclosure may be implemented through modules capable of achieving the functions in the present disclosure (e.g., processes or functions). Software codes may be stored in the memory and executed by the processor. The memory may be implemented inside or outside the processor.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A method for determining an edge application, applied for a first Domain Name System (DNS), comprising:
receiving a DNS addressing request, the DNS addressing request comprising indication information for addressing the edge application;
obtaining information of a target edge application in accordance with the indication information for addressing the edge application; and
transmitting the information of the target edge application.

2. The method according to claim 1, wherein the indication information for addressing the edge application comprises at least one of:
a Tracking Area (TA) where a User Equipment (UE) is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier; and
the information of the slice comprises at least one of a business type of the slice and a tenant identifier of the slice.

3. The method according to claim 2, wherein the obtaining the information of the target edge application in accordance with the indication information for addressing the edge application comprises:
transmitting a query request to an edge DNS in accordance with the indication information for addressing the edge application; and
receiving a response message from the edge DNS, the response message comprising the information of the target edge application.

4. The method according to claim 3, wherein the information of the target edge application comprises at least one of an Internet Protocol (IP) address of the target edge application, and a Fully Qualified Domain Name (FQDN) of the target edge application.

5. The method according to claim 1, wherein the indication information for addressing the edge application comprises an indication indicating that a UE needs to use an edge service,
wherein the obtaining the information of the target edge application in accordance with the indication information for addressing the edge application comprises:
transmitting a first query request to a scheduling center of an edge computing node;
receiving a first response message from the scheduling center of the edge computing node, the first response message comprising information of an edge DNS;
transmitting a second query request to the edge DNS in accordance with the information of the edge DNS; and
receiving a second response message from the edge DNS, the second response message comprising the information of the target edge application.

6. A method for determining an edge application, applied for a UE, comprising:
transmitting a DNS addressing request to a first DNS, the DNS addressing request comprising indication information for addressing the edge application; and
receiving information of a target edge application from the first DNS.

7. The method according to claim 6, wherein the indication information for addressing the edge application comprises at least one of:
a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier; and
the information of the slice comprises at least one of a business type of the slice and a tenant identifier of the slice.

8. The method according to claim 6, wherein the indication information for addressing the edge application comprises an indication indicating that the UE needs to use an edge service.

9. A method for determining an edge application, applied for an edge DNS, comprising:
receiving a query request from a first DNS; and
transmitting information of a target edge application to the first DNS in accordance with the query request,
wherein the query request is transmitted by the first DNS in accordance with a DNS addressing request of a UE, and the DNS addressing request comprises indication information for addressing the edge application.

10. The method according to claim 9, wherein the indication information for addressing the edge application comprises at least one of:
a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier; and
the information of the slice comprises at least one of a business type of the slice and a tenant identifier of the slice.

11. The method according to claim 9, wherein the indication information for addressing the edge application comprises an indication indicating that the UE needs to use an edge service.

12. A method for determining an edge application, applied for a scheduling center of an edge computing node, comprising:
receiving a query request from a first DNS; and
transmitting information of an edge DNS to the first DNS in accordance with the query request, so that the first DNS obtains information of a target edge application from the edge DNS in accordance with the information of the edge DNS,
wherein the query request is transmitted by the first DNS in accordance with a DNS addressing request of a UE, and the DNS addressing request comprises indication information for addressing the edge application.

13. The method according to claim 12, wherein the indication information for addressing the edge application comprises at least one of:
a TA where the UE is located, information of a cell where the UE is located, an identifier of a base station to which the UE is connected, an identifier of a forwarding plane to which the UE is connected, an identifier of a network to which the UE belongs, information of a private network or an identifier of the private network, information of a slice or an identifier of the slice, information of an application provider or an identifier of the application provider, information of a business provider or an identifier of the business provider, information of a business supplier or an identifier of the business supplier, information of a service supplier or an identifier of the service supplier, and a business type or a business identifier; and
the information of the slice comprises at least one of a business type of the slice and a tenant identifier of the slice.

14. The method according to claim 12, wherein the indication information for addressing the edge application comprises an indication indicating that the UE needs to use an edge service.

15. A device for determining an edge application, applied for a first DNS, comprising a processor and a transceiver,
wherein the transceiver is configured to receive a DNS addressing request of a UE, the DNS addressing request comprises indication information for addressing the edge application,
the processor is configured to obtain information of a target edge application in accordance with the indication information for addressing the edge application, and
the transceiver is further configured to transmit the information of the target edge application to the UE.

16. A device for determining an edge application, applied for a UE, comprising a processor and a transceiver,
wherein the transceiver is configured to: transmit a DNS addressing request to a first DNS, the DNS addressing request comprising indication information for addressing the edge application; and receive information of a target edge application from the first DNS.

17. A device for determining an edge application, applied for an edge DNS, comprising a processor and a transceiver,
wherein the transceiver is configured to: receive a query request from a first DNS; and transmit information of a target edge application to the first DNS in accordance with the query request,
wherein the query request is transmitted by the first DNS in accordance with a DNS addressing request of a UE, and the DNS addressing request comprises indication information for addressing the edge application.

18. A device for determining an edge application, applied for a scheduling center of an edge computing node, comprising a processor and a transceiver,
wherein the transceiver is configured to: receive a query request from a first DNS; and transmit information of an edge DNS to the first DNS in accordance with the query request, so that the first DNS obtains information of a target edge application from the edge DNS in accordance with the information of the edge DNS, wherein the query request is transmitted by the first DNS in accordance with a DNS addressing request of a UE, and the DNS addressing request comprises indication information for addressing the edge application.

19. A communication apparatus, comprising a memory, a processor, and a computer program stored in the memory and executed by the processor,
wherein the processor is configured to execute the computer program so as to implement the steps of the method according to any one of claims 1 to 5, or implement the steps of the method according to any one of claims 6 to 8, or implement the steps of the method according to any one of claims 9 to 11, or implement the steps of the method according to any one of claims 12 to 14.

20. A computer-readable storage medium storing therein a computer program, wherein the computer program is executed by a processor so as to implement the steps of the method according to any one of claims 1 to 5, or implement the steps of the method according to any one of claims 6 to 8, or implement the steps of the method according to any one of claims 9 to 11, or implement the steps of the method according to any one of claims 12 to 14.
